# EUROPEAN PATENT APPLICATION

(11) **EP 4 661 567 A1**
(43) Date of publication of application: **10.12.2025**
(21) Application number: 23919037.4
(22) Date of filing: 01.02.2023
(51) Int. Cl.: H04W 72/40

(54) **SCHEDULING METHODS AND APPARATUSES FOR SIDELINK POSITIONING REFERENCE SIGNAL**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2023/074152
(87) International publication number: WO 2024/159459

(57) **Abstract**

The present disclosure relates to the technical field of communications. Provided are scheduling methods and apparatuses for a sidelink positioning reference signal. A scheduling method for a sidelink positioning reference signal comprises: when a user equipment has a triggered sidelink positioning reference signal (SL PRS) and the user equipment has no available sending resource, sending a resource request to a network device, wherein the available sending resource is used for the user equipment to send the triggered SL PRS. By using the scheduling methods and apparatuses for a sidelink positioning reference signal provided in the present disclosure, a base station can be informed of the case that a terminal requires a sending resource for sending a triggered SL PRS, such that the triggered SL PRS can be sent out in a timely manner.

## Description

### TECHNICAL FIELD

The present disclosure relates to the communication technical field, and in particular to a scheduling method and apparatus for a sidelink positioning reference signal.

### BACKGROUND

Terminal-to-terminal communication may be performed via a sidelink (SL), so that a terminal may perform positioning interaction with other terminal(s) based on the sidelink communication to determine positioning information of the terminal.

In related art, other terminal(s) may transmit a Sidelink Positioning Reference Signal (SL PRS) to the terminal through the sidelink to determine the terminal's positioning information. However, when other terminal(s) needs(need) to transmit an SL PRS to the terminal, a base station cannot know that other terminal(s) needs(need) a transmission resource to transmit the SL PRS, resulting in that other terminal(s) may not be able to successfully transmit the SL PRS to the terminal.

### SUMMARY

In order to overcome the problem existing in the related art, the present disclosure provides a scheduling method and apparatus for a sidelink positioning reference signal.

According to a first aspect of an embodiment of the present disclosure, a scheduling method for a sidelink positioning reference signal is provided. The method is performed by user equipment. The method includes:
in a case where the user equipment has a triggered Sidelink Positioning Reference Signal (SL PRS) and the user equipment has no available transmission resource, sending a resource request to a network device, wherein the available transmission resource is used for the user equipment to transmit the triggered SL PRS.

According to a second aspect of an embodiment of the present disclosure, a scheduling method for a sidelink positioning reference signal is provided. The method is performed by a network device. The method includes:
receiving a resource request sent by user equipment; and
according to the resource request, configuring a transmission resource to the user equipment.

According to a third aspect of an embodiment of the present disclosure, a scheduling apparatus for a sidelink positioning reference signal is provided. The apparatus includes:
a sending module configured to, in a case where user equipment has a triggered Sidelink Positioning Reference Signal (SL PRS) and the user equipment has no available transmission resource, send a resource request to a network device.

According to a fourth aspect of an embodiment of the present disclosure, a scheduling apparatus for a sidelink positioning reference signal is provided. The apparatus includes:
a receiving module configured to receive a resource request sent by user equipment; and
a configuration module configured to configure a transmission resource to the user equipment according to the resource request.

According to a fifth aspect of an embodiment of the present disclosure, a sidelink positioning reference signal scheduling system is provided. The system includes user equipment and a network device;
the user equipment sends a resource request to the network device in a case where the user equipment has a triggered Sidelink Positioning Reference Signal (SL PRS) and the user equipment has no available transmission resource for transmitting the triggered SL PRS;
the resource request sent by the user equipment is received, and a transmission resource is configured to the user equipment according to the resource request.

According to a sixth aspect of an embodiment of the present disclosure, user equipment is provided, including:
a processor; and
a memory configured to store instructions executable by the processor;
wherein the processor is configured to, when the executable instructions are executed, implement the step of the scheduling method for the sidelink positioning reference signal provided by the first aspect of the embodiment of the present disclosure.

According to a seventh aspect of an embodiment of the present disclosure, a network device is provided, including:
a processor; and
a memory configured to store instructions executable by the processor;
wherein the processor is configured to, when the executable instructions are executed, implement the step of the scheduling method for the sidelink positioning reference signal provided by the second aspect of the embodiment of the present disclosure.

According to an eighth aspect of an embodiment of the present disclosure, a computer-readable storage medium is provided, on which computer program instructions are stored. When the program instructions are executed by a processor, the step of the scheduling method for the sidelink positioning reference signal provided by the first aspect of the embodiment of the present disclosure is implemented, or the step of the scheduling method for the sidelink positioning reference signal provided by the first aspect of the embodiment of the present disclosure is implemented.

### BRIEF DESCRIPTION OF THE DRAWINGS

The accompanying drawings, which are incorporated in and constitute a part of the specification, illustrate embodiments consistent with the present disclosure and, together with the specification, serve to explain the principles of the present disclosure.
FIG. 1 is a flowchart showing a step of a scheduling method for a sidelink positioning reference signal according to an example embodiment.
FIG. 2 is a schematic diagram showing a transmitting terminal transmitting an SL PRS to a receiving terminal according to an example embodiment.
FIG. 3 is a flowchart showing a step of a scheduling method for a sidelink positioning reference signal according to an example embodiment.
FIG. 4 is a flowchart showing a step of a scheduling method for a sidelink positioning reference signal according to an example embodiment.
FIG. 5 is a flowchart showing a step of a scheduling method for a sidelink positioning reference signal according to an example embodiment.
FIG. 6 is a flowchart showing a step of a scheduling method for a sidelink positioning reference signal according to an example embodiment.
FIG. 7 is a flowchart showing a step of a scheduling method for a sidelink positioning reference signal according to an example embodiment.
FIG. 8 is a flowchart showing a step of a scheduling method for a sidelink positioning reference signal according to an example embodiment.
FIG. 9 is a flowchart showing a step of a scheduling method for a sidelink positioning reference signal according to an example embodiment.
FIG. 10 is a flowchart showing a step of a scheduling method for a sidelink positioning reference signal according to an example embodiment.
FIG. 11 is a flowchart showing a step of a scheduling method for a sidelink positioning reference signal according to an example embodiment.
FIG. 12 is a flowchart showing a step of a scheduling method for a sidelink positioning reference signal according to an example embodiment.
FIG. 13 is a flowchart showing step(s) of a scheduling method for a sidelink positioning reference signal according to an example embodiment.
FIG. 14 is a flowchart showing a step of a scheduling method for a sidelink positioning reference signal according to an example embodiment.
FIG. 15 is a flowchart showing step(s) of a scheduling method for a sidelink positioning reference signal according to an example embodiment.
FIG. 16 is a flowchart showing a step of a scheduling method for a sidelink positioning reference signal according to an example embodiment.
FIG. 17 is a flowchart showing a step of a scheduling method for a sidelink positioning reference signal according to an example embodiment.
FIG. 18 is a block diagram of a scheduling apparatus for a sidelink positioning reference signal according to an example embodiment.
FIG. 19 is a block diagram of a scheduling apparauts for a sidelink positioning reference signal according to an example embodiment.
FIG. 20 is a block diagram of a scheduling apparatus for a sidelink positioning reference signal according to an example embodiment.
FIG. 21 is a block diagram of a scheduling apparatus for a sidelink positioning reference signal according to an example embodiment.

### DETAILED DESCRIPTION

Example embodiments will be described in detail herein, examples of which are shown in the accompanying drawings. When the following description refers to the drawings, the same numbers in different drawings represent the same or similar elements unless otherwise indicated. The implementations described in the following example embodiments do not represent all embodiments consistent with the present disclosure. Instead, they are merely examples of devices and methods consistent with some aspects of the present disclosure as detailed in the appended claims.

It should be noted that all actions of acquiring signals, information or data in this application are carried out in compliance with relevant data protection laws and policies of a country where the present disclosure is implemented, and the present disclosure are carried out with an authorization given by an owner of a corresponding apparatus.

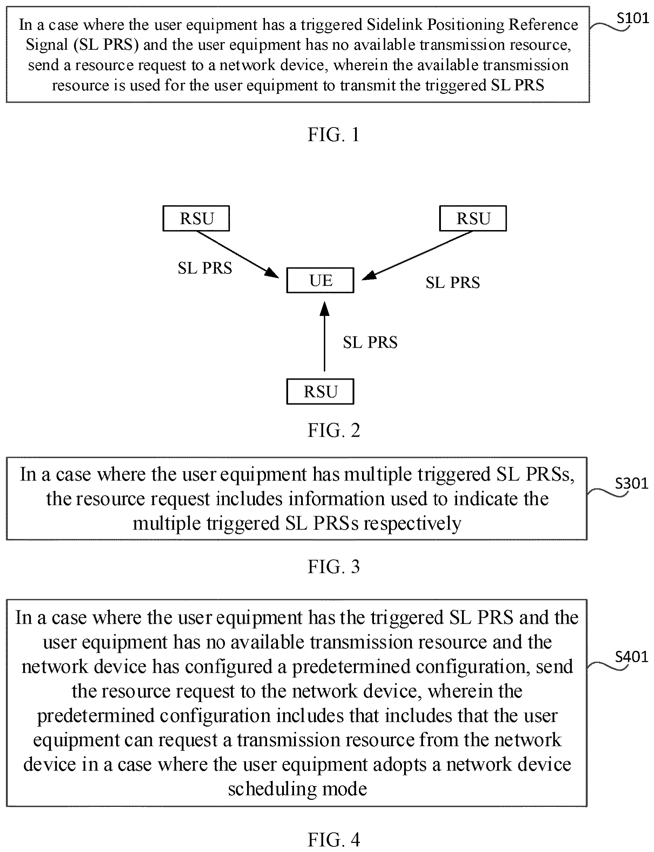

FIG. 1 is a flowchart showing a step of a scheduling method for a sidelink positioning reference signal according to an example embodiment. The method is performed by user equipment and includes the following step:

In step S101, in a case where the user equipment has a triggered Sidelink Positioning Reference Signal (SL PRS) and the user equipment has no available transmission resource, a resource request is sent to a network device. The available transmission resource is used for the user equipment to transmit the triggered SL PRS.

The user equipment proposed in any embodiment of the present disclosure may be a mobile phone, a tablet, a portable computer, a computer with a wireless transceiving function, a Virtual Reality (VR) terminal device, an Augmented Reality (AR) terminal device, a wireless terminal in industrial control, a wireless terminal in a smart grid, a wireless terminal in transportation safety, a wireless terminal in a smart city, a wireless terminal in a smart home, etc. The present disclosure does not limit the application scenario, and the user equipment may sometimes also be referred to as a terminal device, a terminal, an access terminal, a UE unit, a UE station, a mobile device, a mobile, a mobile station, a mobile client, etc. For the convenience in reading, the user equipment is referred to as a terminal hereinafter.

For the convenience of description, a terminal to be positioned, that is, a terminal receiving an SL PRS, is referred to as a receiving terminal (target UE); a terminal assisting the receiving terminal in positioning, that is, a terminal transmitting the SL PRS, is referred to as a transmitting terminal. The transmitting terminal may be a positioning assistant terminal (assistant UE) or an anchor terminal (anchor UE), and the receiving terminal may also be a positioning assistant terminal or an anchor terminal. The positioning assistant terminal and the anchor terminal are only for the convenience of readers to distinguish between terminals, and are not intended to limit the terminals themselves. Any terminal may be used as at least one of a positioning assistant terminal and an anchor terminal in different communication scenarios, and the present disclosure does not limit this.

There are different types of anchor terminals. An anchor terminal may be a Roadside Unit (RSU), a RSU and other RSU(s) cooperate with each other to provide a positioning service for a receiving terminal. An anchor terminal may also be an ordinary terminal, and it is difficult for the ordinary terminal to cooperate with other terminal(s) to provide a positioning service. An anchor terminal may also be a terminal with position information such as GPS to assist other terminal(s) in sidelink absolute positioning of a receiving terminal. An anchor terminal may also be a terminal without position information such as GPS. It can be understood that when positioning involves only two terminals, the two terminals are anchor terminals for each other.

The positioning assistant terminal is a terminal that provides positioning assistance in sidelink positioning between two terminals when there is no sidelink between the two terminals. The positioning assistant terminal measures sidelink positioning results between the two terminals and the positioning assistant terminal respectively to obtain the sidelink positioning result between the two terminals. The sidelink positioning result includes at least one of an absolute position of the terminal, a relative position and a distance.

In related art, there are two methods to position a receiving terminal.

Method 1: Uu-interface positioning. The Uu-interface is a wireless interface between a terminal and a base station. The positioning based on the Uu-interface is called Uu-interface positioning. The positioning methods for Uu-interface positioning include: Time Difference of Arrival (TDOA) positioning, Angle of Departure (AOD) positioning, Angle of Arrival (AOA) positioning, Multi-Round-Trip Time (Multi-RTT) positioning, Assisted Global Navigation Satellite System (A-GNSS) positioning, Wireless Signal (WLAN) positioning, Bluetooth positioning, sensor positioning, carrier phase positioning, Enhanced Cell-ID (E-CID) positioning, etc.

Method 2: sidelink positioning. The positioning based on the sidelink between terminals is called sidelink positioning. Sidelink positioning includes sidelink absolute positioning, sidelink relative positioning and ranging. The sidelink absolute positioning is to determine an absolute position of a terminal. The sidelink relative positioning is to determine a relative position of a terminal relative to a reference point. The ranging is to determine a distance and/or angle of a terminal relative to a reference point.

The ranging is usually performed between two terminals, but the sidelink absolute positioning and the sidelink relative positioning may involve multiple terminals to participate in positioning.

The sidelink positioning methods include: Sidelink Round-Trip Time (SL-RTT) positioning, Sidelink Time Difference of Arrival (SL-TDOA) positioning, Sidelink Angle of Arrival (Sidelink AOA, SL-AOA) positioning, etc.

Referring to an example of SL-TDOA positioning shown in FIG. 2, a UE in FIG. 2 is a receiving terminal, and RSUs are transmitting terminals. Three RSUs transmit SL PRSs to the UE through the sidelink, and the UE may determine a relative position of the UE relative to the three RSUs by measuring the SL PRSs sent by the three RSUs. If it is needed to determine an absolute position of the UE, absolute positions of the three RSUs may also be determined through the Uu-interface positioning, and then the absolute positions of the three RSUs are combined with the relative position of the UE relative to the three RSUs to obtain the absolute position of the UE.

It can be seen that no matter whether the relative position or the absolute position of the receiving terminal is to be determined, the transmitting terminal(s) is(are) required to transmit SL PRS(s) to the receiving terminal. However, when the transmitting terminal(s) transmits(transmit) the SL PRS(s) to the terminal, a base station cannot know that the transmitting terminal(s) needs(need) transmission resource(s) to transmit the SL PRS(s), resulting in that the transmit terminal(s) may not be able to successfully transmit the SL PRS(s) to the receiving terminal.

In view of above, the present disclosure proposes: in a case where user equipment has a triggered Sidelink Positioning Reference Signal (SL PRS) and the user equipment has no available transmission resource to transmit the SL PRS, a resource request is sent to a network device to request the network device to configure transmission resource(s) to transmit the SL PRS to a receiving terminal, thereby completing the positioning of the receiving terminal.

It can be understood that if the transmitting terminal is an anchor terminal or assistant terminal such as RSU, and the receiving terminal is a target terminal to be positioned, the base station needs to allocate transmission resource(s) to the anchor terminal or the assistant terminal. The anchor terminal or the assistant terminal uses the transmission resource(s) to transmit the SL PRS to the target terminal. If the transmitting terminal is the target terminal to be positioned, and the receiving terminal is an anchor terminal or an assistant terminal, the base station needs to allocate transmission resource(s) to the target terminal, and the target terminal uses the transmission resource(s) to transmit the SL PRS to the anchor terminal or the assistant terminal.

In order to support direct communication between terminals, data communication is established between respective terminals through fifth-generation mobile communication system (5G) or fifth-generation mobile communication system (4G) communication technologies. Based on the sidelink communication method, terminals may communicate directly with each other through a PC-5 interface.

There are two transmission resource allocation modes during a sidelink communication procedure. One is a network dynamic scheduling mode, and the other is a mode of autonomous selection by a UE from a resource pool broadcast by a base station.

The network dynamic scheduling mode is that a base station dynamically allocates transmission resource(s) on the sidelink for a terminal according to buffered data reported by the terminal. The scheme of autonomous selection is that a terminal autonomously and randomly selects a transmission resource from a transmission resource pool in system information or pre-configured transmission resource(s) or transmission resource(s) in a Radio Resource Control (RRC) reconfiguration message. With respect to system information, the base station may send the system information to the terminal. For example, the base station may generate the system information based on whether there is a resource pool in the network and which resource pools exist. The base station broadcasts the system information, and terminals covered by the base station network obtain the system information. The terminals may use the transmission resource pool in the system information broadcast by the base station for sidelink communication. With respect to the RRC reconfiguration message, the RRC reconfiguration message is a message generated by the base station according to a resource request reported by the terminal. The message carries the transmission resource(s) returned by the base station to the terminal. The terminal may use the transmission resource(s) in the reconfiguration message for sidelink communication. The pre-configured transmission resource(s) is(are) transmission resource(s) pre-configured in the terminal, and the terminal may use the pre-configured transmission resource(s) for sidelink communication.

It can be seen that the sidelink communication can realize direct communication between a transmitting terminal and a receiving terminal, and in the procedure of communication between the transmitting terminal and the receiving terminal, the transmitting terminal needs transmission resource(s) on the sidelink to transmit an SL PRS to the receiving terminal. The transmission resource(s) on the sidelink may be pre-configured at the terminal or may be configured to the terminal by the base station.

The transmission resource(s) includes(include) frequency resource(s) and time domain resource(s), etc. A frequency resource includes a carrier, a subcarrier, a frequency spectrum resource, a bandwidth, etc.

The resource request includes at least one of: a bandwidth requirement, a transmission type of the transmission resource(s), a latency requirement, a period requirement.
(1) The bandwidth requirement is a bandwidth requested by the terminal to the base station for SL-PRS transmission.
(2) The transmission type of the transmission resource(s) is the type of transmission resource(s) requested by the terminal to the base station for SL-PRS transmission, including at least one of: a one-time transmission resource, a periodic transmission resource, or a semi-persistent transmission resource.

With respect to the one-time transmission resource, the base station configures the one-time transmission resource to the terminal through RRC signaling. The one-time transmission resource includes information such as frequency domain resource position(s) and symbol position(s) occupied by a slot of the one-time transmission resource. The terminal transmits an SL PRS once according to the one-time transmission resource allocated by the base station.

With respect to the periodic transmission resource(s), the base station configures the periodic transmission resource(s) to the terminal through RRC signaling. The periodic transmission resource(s) includes(include) information such as the period of the periodic transmission resource(s), a slot offset, symbol position(s) occupied by a slot, and frequency domain resource position(s), etc. After receiving the periodic transmission resource(s), the terminal may periodically transmit an SL PRS according to the periodic transmission resource(s) allocated by the base station immediately or after a period of time.

With respect to the semi-persistent transmission resource(s), the semi-persistent transmission resource(s) include information such as the period of the semi-persistent transmission resource(s), a slot offset, symbol position(s) occupied by a slot and frequency domain resource position(s), etc. After the terminal receives the semi-persistent transmission resource(s), the terminal further needs to receive activation information sent by the base station to activate a semi-persistent transmission resource, and then uses the semi-persistent transmission resource to transmit an SL PRS.

It can be seen that the terminal may use transmission resources of different transmission types to perform SL PRS transmission. In this procedure, different services may trigger the terminal to use transmission resources of different transmission types. Some services require the terminal to transmit an SL PRS once, and some services require the terminal to transmit an SL PRS periodically.

(3) The latency requirement is the latency for the base station to schedule transmission resource(s) as expected by the terminal. For example, the latency requirement may be the latency between the time when the terminal sends a resource request and the time when the terminal can transmit an SL PRS. Alternatively, the latency requirement may be the latency between the time when the base station receives the resource request and the time when the terminal can transmit an SL PRS.

(4) Period requirement: both the periodic transmission resource(s) and the semi-persistent transmission resource(s) have a transmission period. The periodic transmission resource(s) does(do) not require base station activation, while the semi-persistent transmission resource(s) need(needs) base station activation. Therefore, if the transmission type indicated in the resource request is the periodic transmission resource(s) or semi-persistent transmission resource(s), the terminal needs to indicate to the base station the transmission period expected by the terminal.

Some services may trigger a transmitting terminal to select at least one of the above-mentioned multiple positioning methods to position a relative position or an absolute position of a receiving terminal. Regardless of positioning the relative position or absolute position of the receiving terminal itself, the transmitting terminal needs to transmit an SL PRS to the receiving terminal, and the receiving terminal can determine its own relative position or absolute position by measuring the SL PRS. In a case where the transmitting terminal currently has a triggered SL PRS and the transmitting terminal currently has no available transmission resource to transmit the SL PRS, it means that the transmitting terminal is currently unable to transmit the SL PRS to the receiving terminal. At this time, the transmitting terminal may send a resource request to the receiving terminal to request the base station to allocate transmission resource(s) for transmitting the SL PRS. After the base station allocates the transmission resource(s) for transmitting the SL PRS, the SL PRS is transmitted to the receiving terminal using the transmission resource(s) allocated by the base station to complete the positioning of the receiving terminal.

In some implementations, in a case where a terminal has a triggered SL PRS and the terminal has available transmission resource(s) to transmit the SL PRS, there is no need to request the base station for transmission resource(s) for transmitting the SL PRS, and the terminal can use the available transmission resource(s) to transmit the SL PRS to the receiving terminal.

With the above technical solutions, in a case where the terminal has a triggered SL PRS and has no available transmission resource to transmit the SL PRS, a resource request is sent to the base station to request a transmission resource from base station to transmit the SL PRS, so that the base station knows that the terminal needs a transmission resource to transmit the SL PRS.

FIG. 3 is a flowchart showing a step of a scheduling method for a sidelink positioning reference signal according to an example embodiment. The method is performed by user equipment and includes the following step:

In step S301, in a case where the user equipment has multiple triggered SL PRSs, the resource request includes information used to indicate the multiple triggered SL PRSs respectively.

In a case where the terminal has multiple triggered SL PRSs, that is, the terminal has multiple SL PRSs to be transmitted, the resource request sent by the terminal to the base station further includes information used to indicate the multiple triggered SL PRSs respectively.

The information for indicating the multiple triggered SL PRSs in the resource request of the terminal may be identities of the multiple triggered SL PRSs. For example, identity 1 is added after a first SL PRS to identify the first SL PRS, identity 2 is added after a second SL PRS to identify the second SL PRS, and so on.

It can be understood that in a case where the same SL PRS(s) exist among multiple triggered SL PRSs, the same SL PRS(s) may share a same identity, or in a case where multiple triggered SL PRSs are regarded as the same SL PRSs, the multiple triggered SL PRSs may share the same identity.

With the above solution, information of multiple triggered SL PRSs can be indicated respectively in the resource request sent by the terminal to the base station. Thus, the base station can allocate corresponding transmission resources for different SL PRSs according to the different SL PRSs indicated in the resource request.

FIG. 4 is a flowchart showing a step of a scheduling method for a sidelink positioning reference signal according to an example embodiment. The method is performed by user equipment and includes the following step:

In step S401, in a case where the user equipment has a triggered SL PRS and has no available transmission resource and the network device has configured a predetermined configuration, the resource request is sent to the network device. The predetermined configuration includes that the user equipment can request a transmission resource from the network device in a case where the user equipment adopts a network device scheduling mode.

The terminal being able to request a transmission resource from the base station when the terminal adopts the base station scheduling mode may be as follows: in a case where the terminal adopts the base station scheduling mode, the terminal can successfully send the resource request to the network device; or, in a case where the terminal adopts the base station scheduling mode, the terminal can successfully receive the transmission resource from the base station.

It is understandable that, in a case where the terminal does not adopt the base station scheduling mode, although the terminal cannot request a transmission resource from the base station to transmit the SL PRS, the terminal can send a resource request to the base station to send other service data.

There is a network dynamic scheduling mode in the sidelink transmission procedure. The network dynamic scheduling mode is that the base station dynamically allocates transmission resource(s) on the sidelink to the terminal according to buffered data reported by the terminal.

Therefore, the present disclosure defines that only in the case where the terminal sends a resource request using the network dynamic scheduling mode, the terminal can send the resource request to the base station, and the base station can accept the resource request of the terminal.

For example, if the terminal and the base station may agree to allocate transmission resource(s) through the network dynamic scheduling mode, the terminal sends a resource request to the base station in a case where the terminal itself has an SL PRS triggered by a service and has no available transmission resource to transmit the SL PRS, and the base station allocates transmission resource(s) for the terminal to transmit the SL PRS; conversely, if the terminal and the base station have not agreed to allocate transmission resource(s) through the network dynamic scheduling mode, the terminal cannot send a resource request to the base station in a case where the terminal itself has an SL PRS triggered by a service and has no available transmission resource to transmit the SL PRS.

With the above technical solution, the terminal can send a resource request to the base station in a case where the terminal has a triggered SL PRS and has no available transmission resource to transmit the SL PRS and the terminal requests transmission resource(s) using a base station scheduling mode.

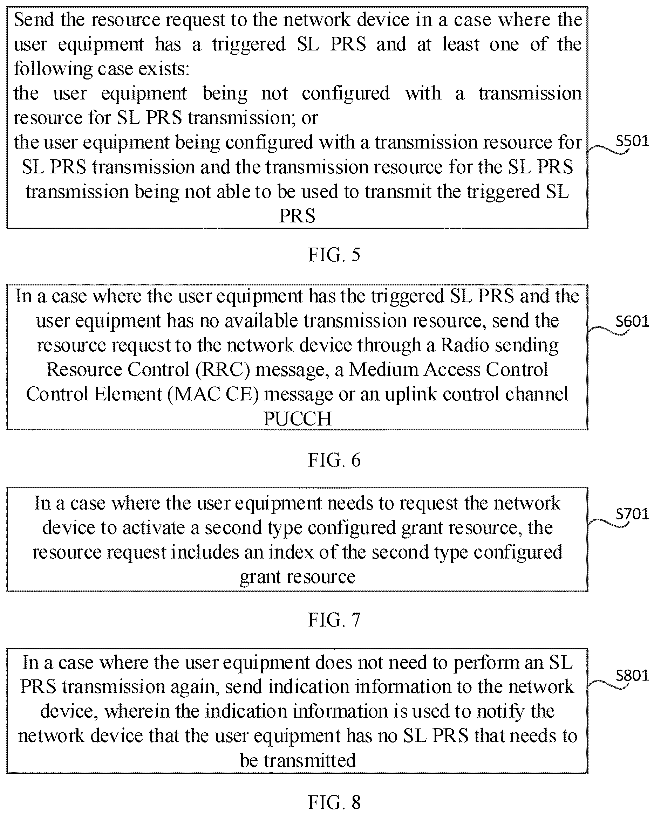

FIG. 5 is a flowchart showing a step of a scheduling method for a sidelink positioning reference signal according to an example embodiment. The method is performed by user equipment and includes the following step:

In step S501, in a case where the user equipment has a triggered SL PRS and at least one of the following case (5) or case (6) exists, a resource request is sent to a network device:

(5) The user equipment is not configured with a transmission resource for SL PRS transmission.

In the sidelink communication procedure, there is a scheme in which a terminal performs autonomous selection from a resource pool broadcast by a base station to select a transmission resource. The terminal may autonomously and randomly select the transmission resource from pre-configured transmission resource(s) or the transmission resource pool in the system information or transmission resource(s) in the RRC reconfiguration message. These transmission resources may be collectively referred to as the transmission resources which the terminal has, and there is no need for base station scheduling.

In a case where the terminal is currently not configured with any transmission resource for SL PRS transmission, it means that the terminal can only adopt the dynamic scheduling mode to request a transmission resource from the base station. Therefore, in a case where the user equipment is not configured with any transmission resource for SL PRS transmission, a resource request can be sent to the base station to let the base station know that the terminal needs a transmission resource to transmit the currently triggered SL PRS.

(6) The user equipment is configured with transmission resource(s) for SL PRS transmission, and the transmission resource for SL PRS transmission cannot be used to transmit the triggered SL PRS.

In a case where the terminal is currently configured with transmission resource(s) for SL PRS transmission, but the configured transmission resource(s) for SL PRS transmission cannot be used to transmit the currently triggered SL PRS, it means that the terminal has no usable transmission resource to transmit the currently triggered SL PRS. At this time, a resource request can be sent to the base station to let the base station know that the terminal needs a transmission resource to transmit the currently triggered SL PRS.

The user equipment being configured with transmission resource(s) for SL PRS transmission and the transmission resource(s) for SL PRS transmission being not able to be used to transmit the triggered SL PRS includes at least one of the following 1), 2), 3), 4) or 5):
1) The SL PRS sequence identity(identities) (SL PRS sequence ID) specified for the transmission resource(s) for SL PRS transmission does(do) not include the SL PRS sequence identity of the triggered SL PRS.

Different SL PRS sequence identities correspond to different transmission resources for SL PRS transmission, and different transmission resources for SL PRS transmission are respectively used to transmit different SL PRS transmissions.

For example, the terminal has multiple transmission resources for SL PRS transmission, and the SL PRS sequence identities of the multiple transmission resources for SL PRS transmission are identities A, B, and C, respectively, and the SL PRS sequence identity of the triggered SL PRS is identity D which is not included in identities A, B, and C. Therefore, the transmission resources for SL PRS transmission which the terminal has cannot be used to transmit the triggered SL PRS sequence identity.

When the SL PRS sequence identity(identities) specified for the transmission resource(s) for SL PRS transmission does(do) not include the SL PRS sequence identity of the triggered SL PRS, it can be determined that the transmission resource(s) for SL PRS transmission owned by the terminal cannot be used to transmit the currently triggered SL PRS. In this case, the terminal needs to request transmission resource(s) from the base station.

2) The bandwidth(s) specified for the transmission resource(s) for SL PRS transmission does(do) not meet the bandwidth requirement of the triggered SL PRS.

Different SL PRSs may require different transmission resources, and therefore, different SL PRSs may also require different bandwidths. When the bandwidth(s) specified for the transmission resource(s) owned by the terminal for SL PRS transmission does(do) not meet the bandwidth requirement of the triggered SL PRS, it can be determined that the transmission resource(s) owned by the terminal for SL PRS transmission cannot be used to transmit the currently triggered SL PRS, and the terminal needs to request transmission resource(s) from the base station.

It can be understood that the bandwidth(s) specified for the transmission resource(s) for SL PRS transmission does(do) not meet the bandwidth requirement of the triggered SL PRS may refer to the following: the bandwidth(s) specified for the transmission resource(s) for SL PRS transmission may be different from the bandwidth of the triggered SL PRS, or the bandwidth(s) specified for the transmission resource(s) for SL PRS transmission may not be within the bandwidth requirement range of the triggered SL PRS.

When the bandwidth(s) specified for the transmission resource(s) for SL PRS transmission does(do) not meet the bandwidth requirement of the triggered SL PRS, it can be determined that the transmission resource(s) owned by the terminal for SL PRS transmission cannot be used to transmit the currently triggered SL PRS. In this case, the terminal needs to request transmission resource(s) from the base station.

3) The latency specified for the transmission resource(s) for SL PRS transmission does not meet the latency requirement of the triggered SL PRS.

The latency specified for the transmission resource(s) for SL PRS transmission is the scheduling latency for the base station to schedule the transmission resource(s) for SL PRS transmission. It can be the latency between the time when the terminal sends the resource request and the time when the terminal can transmit the SL PRS; it can also be the latency between the time when the base station receives the resource request and the time when the terminal can transmit the SL PRS.

It can be understood that the latency specified for the transmission resource(s) for SL PRS transmission not meeting the latency requirement of the triggered SL PRS may refer to the following: the latency specified for the transmission resource(s) for the SL PRS transmission may be different from the latency required by the triggered SL PRS; or, the latency specified for the transmission resource(s) for SL PRS transmission is less than the latency required by the triggered SL PRS.

When the latency specified for the transmission resource(s) for SL PRS transmission does(do) not meet the latency requirement of the triggered SL PRS, it can be determined that the transmission resource(s) owned by the terminal for SL PRS transmission cannot be used to transmit the currently triggered SL PRS. In this case, the terminal needs to request transmission resource(s) from the base station.

4) The transmission period(s) specified for the transmission resource(s) for SL PRS transmission does(do) not meet the transmission period requirement of the triggered SL PRS.

A transmission period specified for a transmission resource for SL PRS transmission may be a transmission period of periodic transmission resource (s), or may be transmission resource of semi-persistent transmission resource(s).

It can be understood that the transmission period(s) specified for the transmission resource(s) for SL PRS transmission not meeting the transmission period requirement of the triggered SL PRS may refer to: the transmission period(s) specified for the transmission resource(s) for SL PRS transmission may be different from the transmission period required by the triggered SL PRS.

When the transmission period(s) specified for the transmission resource(s) for SL PRS transmission does(do) not meet the transmission period requirement of the triggered SL PRS, it can be determined that the transmission resource(s) owned by the terminal for SL PRS transmission cannot be used to transmit the currently triggered SL PRS. In this case, the terminal needs to request transmission resource(s) from the base station.

5) The transmission resource(s) for SL PRS transmission is(are) second type configured grant resource(s) (configured grant type 2), and the transmission resource(s) for SL PRS transmission is(are) in an inactive state.

During uplink communication between a terminal and a base station, the base station needs to grant transmission resource(s) for uplink transmission to the terminal, and the terminal can use the transmission resource(s) to transmit data such as SL PRS to the base station. However, in an uplink grant-free transmission technology, a terminal can use the transmission resource(s) shared by multiple terminals for uplink transmission, without need of requesting transmission resource(s) from the base station, and without the need for the base station to grant transmission resource(s).

There are two transmission modes for grant-free transmission on an uplink shared channel. One is that the base station configures all parameters of configured grant resource(s) to the terminal through higher layer signaling. The configured grant resource(s) in this mode is(are) called first type configured grant resource(s) (configured grant type 1). The other is that the base station indicates activation of configured grant resource(s) in DCI signaling. For example, the base station configures basic parameters required for uplink transmission to the terminal through RRC signaling, and then configures scheduling parameter(s) related to scheduling to the terminal. The scheduling parameter(s) and the basic parameters constitute configured grant resource(s). The base station then sends an activation DCI to activate the scheduling configuration, so that the configured grant resource(s) are activated. The configured grant resource(s) in this mode is(are) called second type configured grant resource(s).

It can be understood that transmission resource(s) for SL PRS transmission in the terminal is(are) second type configured grant resource(s), and the second type configured grant resource(s) is(are) in an inactive state, and the terminal cannot use the second type configured grant resource(s) to transmit the triggered SL PRS. At this time, it can be determined that the transmission resource(s) owned by the terminal for SL PRS transmission cannot be used to transmit the currently triggered SL PRS, and the terminal needs to request transmission resource(s) from the base station.

In some implementations, in a case where the terminal has a triggered SL PRS and the terminal has transmission resource(s) for transmitting the SL PRS, there is no need to request, to the base station, transmission resource(s) for transmitting the SL PRS.

In some implementations, in a case where the terminal has a triggered SL PRS and the terminal has available transmission resource(s) for transmitting the triggered SL PRS, there is no need to request, to the base station, transmission resource(s) for transmitting the SL PRS.

For example, it is determined that there is no need to request, to a base station, transmission resource(s) for transmitting the SL PRS in a case where the terminal has the triggered SL PRS and at least one of the following condition exists:
the SL PRS sequence identity(identities) specified for transmission resource(s) for SL PRS transmission includes(include) an SL PRS sequence identity of the triggered SL PRS;
bandwidth(s) specified for transmission resource(s) for SL PRS transmission meets(meet) the bandwidth requirement of the triggered SL PRS;
the latency specified for transmission resource(s) for SL PRS transmission meets the latency requirement of the triggered SL PRS;
transmission period(s) specified for transmission resource(s) for SL PRS transmission meets(meet) the transmission period requirement of the triggered SL PRS;
transmission resource(s) for SL PRS transmission is(are) second type configured grant resource(s), and the transmission resource(s) for SL PRS transmission is(are) are in an activated state;
transmission resource(s) for SL PRS transmission is(are) first type configured grant resource(s).

Through the above technical solutions, in a case where the terminal has a triggered SL PRS and the terminal is not configured with transmission resource(s) for SL PRS transmission, or the terminal is configured with transmission resource(s) SL PRS transmission but the transmission resources for SL PRS transmission cannot be used to transmit the triggered SL PRS, a resource request is sent to the base station.

FIG. 6 is a flowchart showing a step of a scheduling method for a sidelink positioning reference signal according to an example embodiment. The method is performed by user equipment and includes the following step:

In step S601, in a case where the user equipment has a triggered SL PRS and the user equipment has no available transmission resource, a resource request is sent to the network device through a Radio sending Resource Control (RRC) message, a Medium Access Control Control Element (MAC CE) message or an uplink control channel PUCCH.

The Radio Resource Control (RRC) includes Radio Resource Management (RRM) and Radio Resource Allocation (RRA), which are various control information interacted between a terminal and a base station in a communication technology, so that the terminal can know when to send and receive information.

In some implementations, the RRC message may schedule Sidelink UE Information NR (Sidelink terminal Information New Radio) to transmit a resource request.

For example, if a transmitting terminal and a receiving terminal are both in the coverage of an NR base station, the two terminals communicate with the NR base station through the Uu interface, and the transmitting terminal and the receiving terminal communicate through the PC5 interface. If the transmitting terminal wishes to transmit an SL PRS to the receiving terminal through the sidelink, the transmitting terminal and the receiving terminal respectively send a request to the base station through a Sidelink UE Information NR message, and the transmitting terminal indicates a requested sidelink transmission resource in the request, and the receiving terminal indicates a requested sidelink receiving resource in the request.

The MAC Control Element (MAC CE) is a way for a terminal and a base station to exchange control information in addition to the RRC message and Non-Access Stratum (NAS) message. What is exchanged is control information about the MAC layer.

The Physical Uplink Control Channel (PUCCH) is used to carry uplink control information and other control information, including a transmission format, a resource allocation, an uplink scheduling grant, power control and uplink retransmission information, etc. It is a physical link for uplink transmission between the terminal and the base station. The terminal may send a resource request to the base station through PUCCH.

In some implementations, the PUCCH may schedule Synchronizing Resources (SR) to send the resource request. For SR, the base station may configure a SR resource dedicated for the resource request. The base station may configure different SR resources for different types of SL-PRS and/or different bandwidth requirements, or may configure the same SR resource.

Through the above technical solutions, when in a case where user equipment has a triggered SL PRS and the user equipment has no available transmission resource, the resource request is sent to the network device through at least one of the following way: a Radio sending Resource Control (RRC) message, a Medium Access Control Control Element (MAC CE) message or an uplink control channel.

FIG. 7 is a flowchart showing a step of a scheduling method for a sidelink positioning reference signal according to an example embodiment. The method is performed by user equipment and includes the following step:

In step S701, in a case where the user equipment needs to request the network device to activate a second type configured grant resource, the resource request includes an index of the second type configured grant resource.

In a case where the terminal has a triggered SL PRS and the terminal has an inactive second type configured grant resource, it means that the terminal may request the base station to activate the second type configured grant resource by an activation DCI. At this time, the terminal may send a resource request with the index of the second type configured grant resource to the base station. The base station allocates an activation DCI for the second type configured grant resource according to the index of the second type configured grant resource. After the terminal receives the activation DCI, the activation DCI may be used to activate the second type configured grant resource. In this way, the terminal may use the activated second type configured grant resource to transmit the SL PRS.

It can be understood that activation DCI is DCI signaling for activating the second type configured grant resource. One activated DCI may activate a set of second type configured grant resource(s), which is not limited in the present disclosure.

Through the above technical solutions, in a case where the terminal has a triggered SL PRS and the terminal has an inactive second type configured grant resource, the terminal can send a resource request with an index of the second type configured grant resource to the base station, so that the base station only needs to allocate an activation DCI for the terminal, and there is no need to configure additional transmission resource(s) for the terminal to transmit the SL PRS.

FIG. 8 is a flowchart showing a step of a scheduling method for a sidelink positioning reference signal according to an example embodiment. The method is performed by user equipment and includes the following step:

In step S801, in a case where the user equipment does not need to transmit the SL PRS again, indication information is sent to the network device. The indication information is used to notify the network device that the user equipment has no SL PRS that needs to be transmitted.

In a case where a terminal has an SL PRS triggered by a service, if the terminal has no available transmission resource, the terminal needs to send a resource request to the base station. In a case where the service no longer triggers the SL PRS transmission, the terminal does not need to continue to transmit the SL PRS. At this time, indication information may be sent to the base station to inform the base station that the terminal has no SL PRS to transmit, or to inform the base station that the terminal does not need to transmit the SL PRS again.

The user equipment not needing to transmit the SL PRS again includes at least one of the following (7), (8), and (9):

(7) A triggered one-time transmission is canceled.

It can be understood that, in a case where the transmission type in the resource request sent by the terminal to the base station is a one-time transmission resource, it is deemed that the terminal expects the base station to allocate a one-time transmission resource to transmit the SL PRS to the receiving terminal at one time. In this case, if the resource request of the terminal has been met, that is, the terminal has used the transmission resource allocated by the base station to transmit the SL PRS to the receiving terminal at one time, the triggered one-time transmission is cancelled, and the terminal does not need to transmit the SL PRS again. At this time, the terminal can send indication information to the base station to notify the base station that the terminal has no SL PRS to transmit.

(8) A triggered periodic SL PRS transmission is cancelled.

It can be understood that, in a case where the transmission type in the resource request sent by the terminal to the base station is a periodic transmission resource, it is deemed that the terminal expects the base station to allocate periodic transmission resource(s) to periodically transmit the SL PRS to the receiving terminal. In this case, if the triggered periodic SL PRS transmission of the terminal is canceled or the triggered periodic SL PRS transmission has been completed, the terminal does not need to periodically transmit the SL PRS again. The terminal can send indication information to the base station to notify the base station that the terminal has no SL PRS to transmit.

The triggered periodic SL PRS transmission being cancelled may be that: the service no long requires the terminal to periodically transmit the SL PRS, and the terminal may cancel the execution procedure of periodically transmitting the SL PRS.

The triggered periodic SL PRS transmission being completed may be that: the periodic SL PRS transmission of the terminal can meet the service requirement. For example, two periods of SL PRS transmission can meet the service requirement, and the terminal cancels the execution procedure of periodic SL PRS transmission.

(9) A triggered semi-persistent SL PRS transmission is cancelled.

It can be understood that, in a case where the transmission type in the resource request sent by the terminal to the base station is a semi-persistent transmission resource, it is deemed that the terminal expects the base station to allocate semi-persistent transmission resource(s) to semi-persistently transmit the SL PRS to the receiving terminal. In this case, if the triggered semi-persistent SL PRS transmission of the terminal is canceled or the triggered semi-persistent SL PRS transmission has been completed, the terminal does not need to periodically transmit the SL PRS again. The terminal may send indication information to the base station to notify the base station that the terminal has no SL PRS to transmit.

The triggered semi-persistent SL PRS transmission being cancelled may be that: the service no longer requires the terminal to transmit the SL PRS semi-persistently, and the terminal cancels the execution procedure of semi-persistently transmitting the SL PRS.

The triggered semi-persistent SL PRS transmission being completed may be that: the semi-persistent SL PRS transmission of the terminal can meet the service demand. For example, two cycles of semi-persistent SL PRS transmission have met the service demand, and the terminal cancels the execution procedure of semi-persistently transmitting the SL PRS.

Through the above technical solutions, in a case where the user equipment does not need to transmit the SL PRS again, indication information is sent to the network device, and the indication information is used to notify the network device that the user equipment has no SL PRS that needs to be transmitted, so as to avoid the base station continuously configuring the configuration for SL PRS transmission to the terminal, resulting in a waste of transmission resource(s).

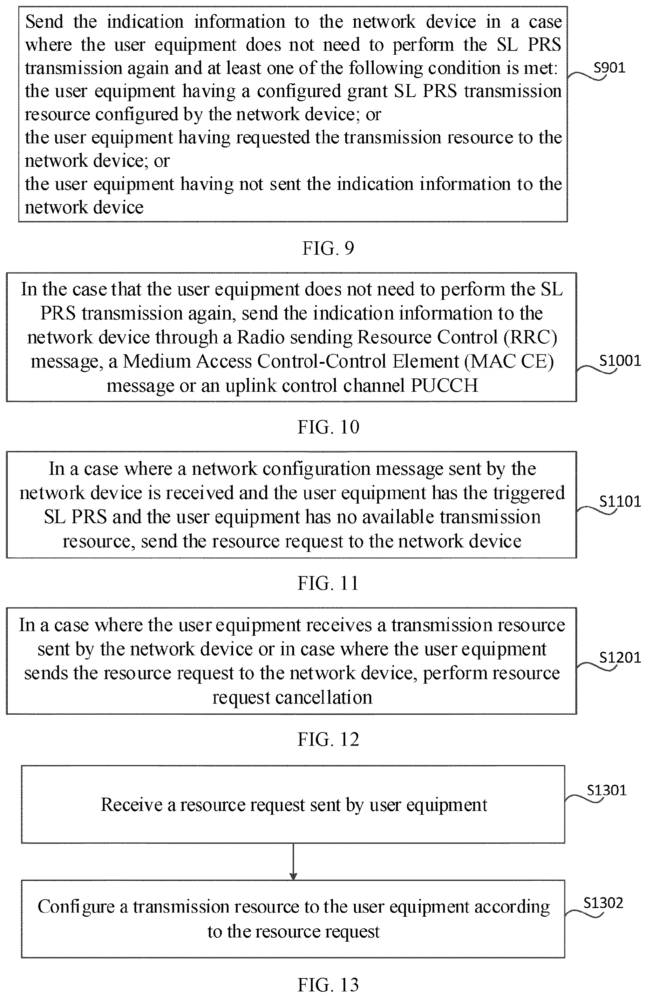

FIG. 9 is a flowchart showing a step of a scheduling method for a sidelink positioning reference signal according to an example embodiment. The method is performed by user equipment and includes the following step:

In step S901, indication information is sent to the network device in a case where the user equipment does not need to transmit the SL PRS again and at least one of the following conditions (10), (11), (12) is met:

(10) The user equipment has configured grant SL PRS transmission resource(s) configured by the network device.

The configured grant SL PRS transmission resource(s) is(are) configured grant (grant-free configuration) SL PRS transmission resource(s). In the uplink grant-free transmission technology, a terminal may use configured grant SL PRS transmission resource(s) shared by multiple terminals for uplink transmission, without need of requesting transmission resource(s) from the base station, and without the need for the base station to grant the transmission resource(s).

When the terminal sends the indication information to the base station, the terminal also needs a transmission resource to send the indication information to the base station. At this time, if the terminal currently has the configured grant SL PRS transmission resource(s) configured by the base station, the configured grant SL PRS transmission resource(s) can be used to send the indication information to the base station; if the terminal currently does not have the configured grant SL PRS transmission resource(s) configured by the base station, the terminal cannot use configured grant SL PRS transmission resource(s) to send the indication information to the base station.

(11) The user equipment has requested transmission resource(s) from the network device.

If the terminal has previously sent a resource request to the base station to request transmission resource(s), it means that the base station has allocated transmission resource(s) for the terminal for SL PRS transmission. At this time, indication information can be sent to the base station to inform the base station that the terminal currently has no SL PRS that needs to be transmitted.

(12) The user equipment has not sent indication information to the network device.

The terminal has not indicated to the base station that no SL PRS needs to be transmitted, which is regarded as the terminal having not sending the indication information to the base station to inform the base station that the terminal has no SL PRS that needs to be transmitted.

When the terminal has not sent indication information to the base station, the terminal can send the indication information to the base station; when the terminal has sent indication information to the base station, the terminal does not need to send the indication information to the base station to avoid occupation of transmission resource(s) caused by repeated sending of the indication information.

Through the above technical solutions, in a case where the user equipment does not need to transmit the SL PRS again, the indication information is sent to the network device, and the indication information is used to notify the network device that the user equipment has no SL PRS that needs to be transmitted, so as to avoid the base station continuously configuring the configuration for SL PRS transmission to the terminal, resulting in a waste of transmission resource(s).

FIG. 10 is a flowchart showing a step of a scheduling method for a sidelink positioning reference signal according to an example embodiment. The method is performed by user equipment and includes the following step:

In step S1001, in a case where the user equipment does not need to transmit the SL PRS again, the indication information is sent to the network device through a Radio sending Resource Control (RRC) message, a Medium Access Control Control Element (MAC CE) message or an uplink control channel.

Regarding the description about the RRC message, the MAC CE message and the uplink control channel in step S1001, reference may be made to the above step S601, and repeated description will be omitted here.

FIG. 11 is a flowchart showing a step of a scheduling method for a sidelink positioning reference signal according to an example embodiment. The method is performed by user equipment and includes the following step:

In step S1101, in a case where a network configuration message sent by a network device is received and the user equipment has a triggered SL PRS and the user equipment has no available transmission resource, the resource request is sent to the network device.

The network configuration message carries information allowing the user equipment to request the transmission resource(s).

For example, the terminal receives the network configuration message, and only when the network configuration message indicates that the terminal is allowed to request the transmission resource(s) for SL PRS transmission, can the terminal request the transmission resource(s) for transmitting the SL PRS from the base station.

In some implementations, when the network configuration message allows the terminal to request transmission resource(s), the terminal can send the resource request to the network device in a case where the network configuration message is received and the user equipment has a triggered SL PRS and the user equipment has no available transmission resource.

In some implementations, when the network configuration message does not allow the terminal to request transmission resource(s), the terminal may not send the resource request to the network device in a case where the network configuration message is received and the user equipment has a triggered SL PRS and the user equipment has no available transmission resource.

With the above technical solutions, only in a case where the base station allows the terminal to request transmission resource(s), the terminal can send the resource request to the base station when the terminal has a triggered SL PRS and has no available transmission resource, so that the behaviors of requesting transmission resource(s) between the terminal and the base station remain consistent.

FIG. 12 is a flowchart showing a step of a scheduling method for a sidelink positioning reference signal according to an example embodiment. The method is performed by user equipment and includes the following step:

In step S1201, in a case where the user equipment receives the transmission resource(s) sent by the network device, or in a case where the user equipment sends the resource request to the network device, resource request cancelling is performed.

In a case where the terminal receives the transmission resource(s) for SL PRS transmission sent by the base station, it means that the resource request of the terminal has been fulfilled, and the resource request(s) of the terminal can be canceled at this time; in a case where the terminal sends the resource request to the base station, it means that the terminal has successfully sent the resource request, and the resource request(s) can also be canceled at this time.

The resource request cancellation includes the terminal cancelling all triggered resource requests, or cancelling a resource request that has been fulfilled by the transmission resource(s).

For example, since the resource request that has been fulfilled by the transmission resource(s) is included in all the triggered resource requests, cancelling all the triggered resource requests can also cancel the resource request that has been fulfilled by the transmission resource(s). After the remaining resource requests that have not been fulfilled by the transmission resource(s) are canceled, they can be triggered again. By cancelling all the triggered resource requests, the terminal does not need to determine which resource request is fulfilled by the transmission resource(s), and the logic is simple and easy to implement.

For example, according to the transmission resource(s) for SL PRS transmission sent by the base station, the terminal can cancel a resource request that can be fulfilled by the transmission resource(s) for SL PRS transmission. By cancelling the resource request fulfilled by the transmission resource(s), it is possible to avoid cancellation of rest resource requests that are not fulfilled by the transmission resource(s), thereby avoiding the second triggering of the rest resource requests that are not fulfilled by the transmission resource(s).

Through the above technical solutions, in a case where the terminal receives the transmission resource(s) sent by the base station, or in a case where the terminal sends the resource request to the base station, resource request cancellation is performed to avoid the base station repeatedly responding to the resource request and allocating redundant transmission resource(s) to the terminal.

FIG. 13 is a flowchart showing steps of a scheduling method for a sidelink positioning reference signal according to an example embodiment. The method is performed by a network device and includes the following steps:

In step S1301, a resource request sent by user equipment is received.

The resource request sent by the terminal is a request for allocating transmission resource(s) for SL PRS transmission, and is sent by the terminal to the base station in a case where the terminal has a triggered Sidelink Positioning Reference Signal (SL PRS) and the user equipment has no available transmission resource.

Regarding step S1301, reference may be made to the above step S101 and repeated description will be omitted here.

In step S1302, according to the resource request, transmission resource(s) is(are) configured to the user equipment.

The resource request carries at least one of: a bandwidth requirement, a transmission types of transmission resource(s), a latency requirement, a period requirement, identities of multiple triggered SL PRSs, an index of second type configured grant resource.

It is understandable that in a case where the transmission type in the resource request is a periodic resource transmission resource or a semi-persistent transmission resource, the resource request carries a period requirement. In a case where the transmission type in the resource request is a one-time transmission resource, the resource request does not need to carry a period requirement.

In a case where the terminal needs to request multiple transmission resources for SL PRS transmission in one resource request at the same time, the resource request includes the identities of multiple triggered SL PRS; in a case where the terminal needs to request one transmission resource for SL PRS transmission in one resource request, the resource request does not need to carry the identities of multiple triggered SL PRSs.

In a case where the terminal needs to request the base station to activate a second type configured grant resource, the resource request also includes an index of the second type configured grant resource.

In some implementations, in a case where the base station receives the resource request carrying a bandwidth requirement, the base station allocates transmission resource(s) to the terminal with a bandwidth that meets the bandwidth requirement. In a case where the base station receives the resource request carrying the transmission type of the transmission resource, the base station allocates transmission resource(s) that meets(meet) the transmission type to the terminal, and allocates the transmission resource(s) that meets(meet) the period requirement according to the period requirement required by the terminal. In a case where the base station receives the resource request carrying a latency requirement, the base station returns the transmission resource(s) with the latency required by the terminal. In a case where the base station receives a resource request carrying the identities of multiple triggered SL PRSs, the base station allocates transmission resources to the multiple triggered SL PRSs respectively according to the identities of the multiple triggered SL PRSs. In a case where the base station receives a resource request carrying an index of a second type configured grant resource, the base station allocates an activation DCI to the terminal to activate the second type configured grant resource indicated by the index of the second type configured grant resource.

The network device provided in any embodiment of the present disclosure may be a device for communicating with a terminal. The network device may also be referred to as an access network device or a radio access network device, and may be a transmission reception point (TRP), or may be an evolved base station (evolved NodeB, eNB or eNodeB) in an LTE system, or a home base station (for example, home evolved NodeB, or home Node B, HNB), a baseband unit (BBU), or a wireless controller in a Cloud Radio Access Network (CRAN) scenario, or the network device may be a relay station, an access point, a vehicle-mounted device, a wearable device, and a network device in a 5G network or a network device in a future evolved PLMN network, etc. It may be an Access Point (AP) in a WLAN, or a gNB in an NR. The embodiments of the present application are not limited to the above examples. For the convenience in reading, the present disclosure refers to the network device as a base station.

Through the above technical solutions, the base station can receive the resource request sent by the terminal in a case where the terminal has a triggered SL PRS and the terminal has no available transmission resource to transmit the SL PRS, and the base station can allocate to the terminal transmission resource(s) that can fulfills the transmission of the currently triggered SL PRS according to the requirement(s) in the resource request, thereby avoiding the situation that the terminal cannot transmit the currently triggered SL PRS in a timely manner.

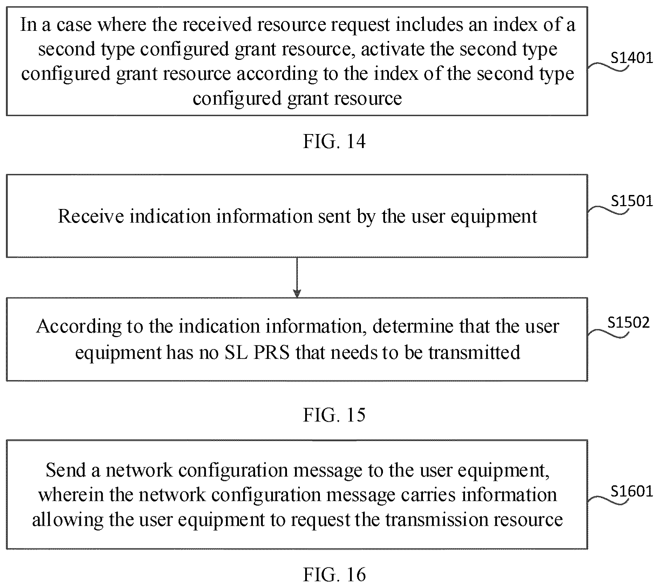

FIG. 14 is a flowchart showing a step of a scheduling method for a sidelink positioning reference signal according to an example embodiment. The method is performed by a network device and includes the following step:

In step S1401, in a case where the received resource request includes an index of a second type configured grant resource, the second type configured grant resource is activated according to the index of the second type configured grant resource.

Regarding step S1401, reference may be made to the above step S701 and repeated description will be omitted here.

Through the above technical solution, in a case where the resource request received by the base station includes the index of the second type configured grant resource, a corresponding activation DCI can be allocated for the second type configured grant resource to activate the second type configured grant resource indicated by the index of the second type configured grant resource. The base station does not need to additionally allocate transmission resource(s) to the terminal, and the terminal can perform SL PRS transmission using the second type configured grant resource.

FIG. 15 is a flowchart showing steps of a scheduling method for a sidelink positioning reference signal according to an example embodiment. The method is performed by a network device and includes the following steps:

In step S1501, indication information sent by the user equipment is received.

Regarding step S1501, reference can be made to the above step S801 and repeated description will be omitted here.

In step S1502, according to the indication information, it is determined that the user equipment has no SL PRS that needs to be transmitted.

The indication information is used to notify the base station that the terminal has no SL PRS that needs to be transmitted. Therefore, after receiving the indication information, the base station can determine that the terminal has no SL PRS that needs to be transmitted. At this time, the base station responds to the indication information and no longer allocates transmission resource(s) to the terminal until receiving a next resource request sent by the terminal.

Through the above technical solutions, the base station can determine, according to the indication information sent by the terminal, that the terminal has no SL PRS that needs to be transmitted.

FIG. 16 is a flowchart showing a step of a scheduling method for a sidelink positioning reference signal according to an example embodiment. The method is performed by a network device and includes the following step:

In step S1601, a network configuration message is sent to the user equipment. The network configuration message carries information allowing the user equipment to request the transmission resource(s).

If the base station allows the terminal to request transmission resource(s), the base station may send the network configuration message to the terminal. The network configuration message is used to indicate the terminal that the terminal is allowed to send a resource request to request transmission resource(s).

Regarding step S1601, reference may be made to above step S1101, and repeated description will be omitted here.

Through the above technical solutions, the base station can send a network configuration message to the terminal when allowing the terminal to request transmission resource(s), to indicate the terminal that the terminal is allowed to request transmission resource(s), so that consistency in the behaviors of requesting transmission resource(s) between the terminal and the base station is ensured.

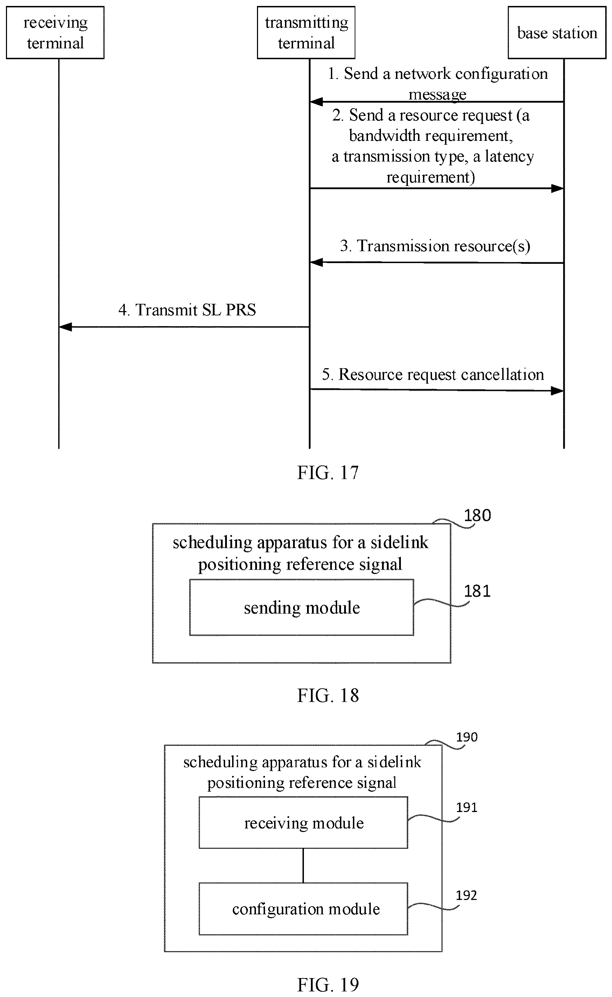

FIG. 17 is an interactive schematic diagram of a scheduling method for a sidelink positioning reference signal according to an example embodiment. The method includes:
1. A base station sends a network configuration message to a transmitting terminal. The network configuration message carries information allowing the user equipment to request transmission resource(s).
2. The transmitting terminal sends a resource request to the base station in a case where the network configuration message sent by the network device is received and the user equipment has a triggered SL PRS and the user equipment has no available transmission resource.
3. The resource request sent by the transmitting terminal is received, and transmission resource(s) is(are) configured to the transmitting terminal according to the resource request.
4. The transmitting terminal transmits the SL PRS to a receiving terminal according to the transmission resource(s).
5. In a case where the transmitting terminal receives the transmission resource(s) sent by the base station and/or in a case where the transmitting terminal sends the resource request to the base station, resource request cancellation is performed.

It is understandable that there is no sequence between step 4 and step 5, and the two steps may be performed simultaneously or one after the other, and the present disclosure does not limit this.

In a case where the transmitting terminal no longer needs to transmit the SL PRS, the transmitting terminal may send indication information to the base station, and the indication information is used to notify the base station that the transmitting terminal has no SL PRS that needs to be transmitted.

FIG. 18 is a block diagram of a scheduling apparatus for a sidelink positioning reference signal according to an example embodiment. The scheduling apparatus 180 for the sidelink positioning reference signal includes:
a sending module 181 configured to, in a case where user equipment has a triggered Sidelink Positioning Reference Signal (SL PRS) and the user equipment has no available transmission resource, send a resource request to a network device.

Optionally, the resource request includes at least one of a bandwidth requirement, a transmission type of transmission resource, or a latency requirement, and the transmission type includes at least one of a one-time transmission resource, a periodic transmission resource, or a semi-persistent transmission resource.

Optionally, in a case where the transmission type in the resource request is periodic transmission resource or the semi-persistent transmission resource, the resource request further includes a transmission period requirement.

Optionally, in the case where the user equipment has multiple triggered SL PRSs, the resource request includes information used to indicate the multiple triggered SL PRSs respectively.

Optionally, the sending module 181 includes:
a sending submodule configured to, in a case where the user equipment has a triggered SL PRS and the user equipment has no available transmission resource and the network device has configured a predetermined configuration, send the resource request to the network device;
the predetermined configuration includes the user equipment can request the network device to allocate a transmission resource in a case where the user equipment adopts a network device scheduling mode.

Optionally, the user equipment having no available transmission resource includes at least one of the following:
the user equipment being not configured with a transmission resource for SL PRS transmission; or
the user equipment being configured with a transmission resource for SL PRS transmission and the transmission resource for SL PRS transmission being not able to be used to transmit the triggered SL PRS.

Optionally, the user equipment being configured with the transmission resource for SL PRS transmission and the transmission resource for SL PRS transmission being not able to be used to transmit the triggered SL PRS includes at least one of the following:
an SL PRS sequence identity specified for the transmission resource for SL PRS transmission not including an SL PRS sequence identity of the triggered SL PRS; or
a bandwidth specified for the transmission resource for SL PRS transmission not meeting a bandwidth requirement of the triggered SL PRS; or
a latency specified for the transmission resource for SL PRS transmission not meeting a latency requirement of the triggered SL PRS; or
a transmission period specified for the transmission resource for SL PRS transmission not meeting a transmission period requirement of the triggered SL PRS; or
the transmission resource for SL PRS transmission being a second type configured grant resource, and the transmission resource for SL PRS transmission being in an inactive state.

Optionally, the sending module 181 includes:
a sending submodule configured to send the resource request to the network device through a Radio sending Resource Control (RRC) message, a Medium Access Control Control Element (MAC CE) message or an uplink control channel PUCCH in a case where the user equipment has a triggered SL PRS and the user equipment has no available transmission resource.

Optionally, in a case where the user equipment needs to request the network device to activate a second type configured grant resource, the resource request includes an index of the second type configured grant resource.

Optionally, the scheduling apparatus 180 for the sidelink positioning reference signal includes:
a sending module configured to send indication information to the network device in a case where the user equipment does not need to transmit the SL PRS again, wherein the indication information is used to notify the network device that the user equipment has no SL PRS that needs to be transmitted.

Optionally, the user equipment not needing to transmit the SL PRS again includes at least one of the following:
a triggered one-time transmission being canceled; or
a triggered periodic SL PRS transmission being cancelled; or
a triggered semi-persistent SL PRS transmission being cancelled.

Optionally, the sending module 181 includes:
a sending submodule configured to send the indication information to the network device in a case where the user equipment does not need to transmit the SL PRS again and at least one of the following condition is met:
the user equipment having a configured grant SL PRS transmission resource which is configured by the network device; or
the user equipment having requested a transmission resource to the network device; or
the user equipment having not sent the indication information to the network device.

Optionally, the sending module 181 includes:
a sending submodule configured to send the indication information to the network device through a Radio sending Resource Control (RRC) message, a Medium Access Control Control Element (MAC CE) message or an uplink control channel PUCCH in a case where the user equipment does not need to send the SL PRS again.

Optionally, the sending module 181 includes:
a sending submodule configured to send the resource request to the network device in a case where a network configuration message sent by the network device is received and the user equipment has a triggered SL PRS and the user equipment has no available transmission resource;
the network configuration message carries information allowing the user equipment to request the transmission resource.

Optionally, the scheduling apparatus 180 for the sidelink positioning reference signal includes:
a sending cancellation module configured to perform resource request cancellation in a case where the user equipment receives the transmission resource sent by the network device.

Optionally, the scheduling apparatus 180 for the sidelink positioning reference signal includes:
a sending cancellation module configured to perform resource request cancellation in a case where the user equipment sends the resource request to the network device.

Optionally, the sending cancellation module includes:
a cancellation submodule configured to cancel all triggered resource requests; or,
cancel a resource request that is fulfilled by the transmission resource.

FIG. 19 is a block diagram of a scheduling apparatus for a sidelink positioning reference signal according to an example embodiment. The scheduling apparatus 190 for the sidelink positioning reference signal includes:
a receiving module 191 configured to receive a resource request sent by user equipment; and
a configuration module 192 configured to configure a transmission resource to the user equipment according to the resource request.

Optionally, the resource request includes at least one of: a bandwidth requirement, a transmission type, or a latency requirement, and the transmission type includes at least one of: one-time transmission, periodic transmission, or semi-persistent transmission.

Optionally, the receiving module 191 includes:
a receiving submodule configured to receive the resource request sent by the user equipment in a case where the network device has configured a predetermined configuration, wherein the predetermined configuration includes configuring the transmission resource for the user equipment in a case where the user equipment adopts a network device scheduling mode.

Optionally, the scheduling apparatus 190 for the sidelink positioning reference signal includes:
a sending module configured to activate a second type configured grant resource according to an index of the second type configured grant resource in a case where the received resource request includes the index of the second type configured grant resource.

Optionally, the scheduling apparatus 190 for the sidelink positioning reference signal includes:
a receiving module configured to receive indication information sent by the user equipment; and
a processing module configured to determine, according to the indication information, that the user equipment has no SL PRS that needs to be transmitted.

Optionally, the scheduling apparatus 190 for the sidelink positioning reference signal includes:
a sending module configured to send a network configuration message to the user equipment, wherein the network configuration message carries information allowing the user equipment to request the transmission resource.

The present disclosure further provides a sidelink positioning reference signal scheduling system. The system includes user equipment and a network device.

The user equipment sends a resource request to the network device in a case where the user equipment has a triggered Sidelink Positioning Reference Signal (SL PRS) and the user equipment has no available transmission resource to transmit the triggered SL PRS;
the resource request sent by the user equipment is received, and a transmission resource is configured to the user equipment according to the resource request.

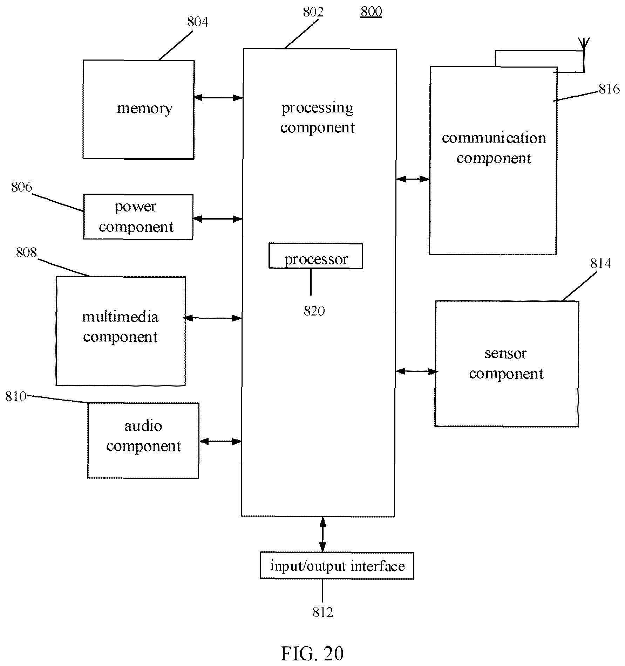

FIG. 20 is a block diagram of user equipment according to an example embodiment. For example, the user equipment 800 may be a mobile phone, a computer, a digital broadcast terminal, a messaging device, a gaming console, a tablet, a medical device, exercise equipment, a personal digital assistant, and the like.

Referring to FIG. 20, the user equipment 800 may include one or more of the following components: a processing component 802, a memory 804, a power component 806, a multimedia component 808, an audio component 810, an input/output interface 812, a sensor component 814, and a communication component 816.

The processing component 802 typically controls overall operations of the user equipment 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the user equipment 800. Examples of such data include instructions for any applications or methods operated on the user equipment 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the user equipment 800. The power component 806 may include a power management system, one or more power sources, and any other components associated with the generation, management, and distribution of power in the user equipment 800.

The multimedia component 808 includes a screen providing an output interface between the user equipment 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the user equipment 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the user equipment 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The input/output interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the user equipment 800. For instance, the sensor component 814 may detect an open/closed status of the user equipment 800, relative positioning of components, e.g., the display and the keypad, of the user equipment 800, a change in position of the user equipment 800 or a component of the user equipment 800, a presence or absence of user contact with the user equipment 800, an orientation or an acceleration/deceleration of the user equipment 800, and a change in temperature of the user equipment 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the user equipment 800 and other devices. The user equipment 800 can access a wireless network based on a communication standard, such as WiFi, 2G, or 3G, or a combination thereof. In one example embodiment, the communication component 816 receives a broadcast signal or broadcast associated information from an external broadcast management system via a broadcast channel. In one example embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the user equipment 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described scheduling methods for the sidelink positioning reference signal.

In example embodiments, there is also provided a non-transitory computer-readable storage medium including instructions, such as the memory 804 including instructions executable by the processor 820 in the user equipment 800, for performing the above-described methods. For example, the non-transitory computer-readable storage medium may be a ROM, a Random Access Memory (RAM), a CD-ROM, a magnetic tape, a floppy disc, an optical data storage device, and the like.

In addition to being an independent electronic device, the above-mentioned apparatus may also be a part of an independent electronic device. For example, in an embodiment, the apparatus may be an Integrated Circuit (IC) or a chip. The integrated circuit may be an IC or a collection of multiple ICs. The chip may include but is not limited to the following types: Graphics Processing Unit (GPU), Central Processing Unit (CPU), Field Programmable Gate Array (FPGA), Digital Signal Processor (DSP), Application Specific Integrated Circuit (ASIC), System on Chip (SoC), etc. The above-mentioned integrated circuit or chip may be used to execute executable instructions (or codes) to implement the above-mentioned scheduling methods for the sidelink positioning reference signal. The executable instructions may be stored in the integrated circuit or chip, or may be obtained from other apparatus(apparatuses) or device(s). For example, the integrated circuit or chip includes a processor, a memory, and an interface for communicating with other apparatus(apparatuses). The executable instructions may be stored in the memory, and when the executable instructions are executed by the processor, the above-mentioned scheduling method(s) for the sidelink positioning reference signal is(are) implemented. Alternatively, the integrated circuit or chip may receive the executable instructions through the interface and transmit the instructions to the processor for execution, so as to implement the above-mentioned scheduling method(s) for the sidelink positioning reference signal.

In another example embodiment, a computer program product is also provided, which includes a computer program that can be executed by a programmable apparatus. The computer program has a code portion for implementing the above-mentioned scheduling method(s) for the sidelink positioning reference signal when executed by the programmable apparatus.

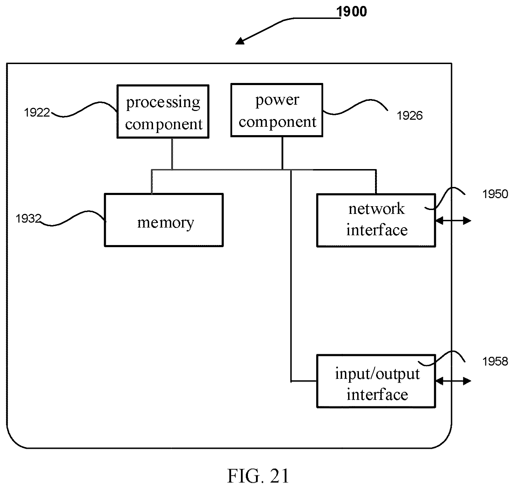

FIG. 21 is a block diagram of a network device 1900 according to an example embodiment. For example, the network device 1900 may be provided as a base station. Referring to FIG. 21, the network device 1900 includes a processing component 1922 that further includes one or more processors, and memory transmission resources represented by a memory 1932 for storing instructions executable by the processing component 1922, such as application programs. The application programs stored in the memory 1932 may include one or more modules each corresponding to a set of instructions. Further, the processing component 1922 is configured to execute the instructions to perform the above-described scheduling methods for the sidelink positioning reference signal.

The network device 1900 may also include a power component 1926 configured to perform power management of the network device 1900, a wired or wireless network interface 1950 configured to connect the network device 1900 to a network, and an input/output interface 1958.

An embodiment of the present disclosure also provides a communication system, which includes a remote UE, an opposite UE of the remote UE, and a relay UE. The remote UE and the opposite UE are remote UEs for each other. The remote UE and the relay UE can perform the above-mentioned scheduling method(s) for the sidelink positioning reference signal.

Other implementations of the present disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A scheduling method for a sidelink positioning reference signal, wherein the method is performed by user equipment, and the method comprises:
in a case where the user equipment has a triggered Sidelink Positioning Reference Signal (SL PRS) and the user equipment has no available transmission resource, sending a resource request to a network device, wherein the available transmission resource is used for the user equipment to transmit the triggered SL PRS.

2. The method according to claim 1, wherein the resource request comprises at least one of a bandwidth requirement, a transmission type of a transmission resource, or a latency requirement, and the transmission type comprises at least one of: a one-time transmission resource, a periodic transmission resource, or a semi-persistent transmission resource.

3. The method according to claim 2, wherein in a case where the transmission type in the resource request is the periodic transmission resource or the semi-persistent transmission resource, the resource request further comprises a transmission period requirement.

4. The method according to claim 1, wherein in a case where the user equipment has multiple triggered SL PRSs, the resource request comprises information used to indicate the multiple triggered SL PRSs respectively.

5. The method according to claim 1, wherein sending the resource request to the network device in the case where the user equipment has the triggered Sidelink Positioning Reference Signal (SL PRS) and the user equipment has no available transmission resource comprises:
in a case where the user equipment has the triggered SL PRS and the user equipment has no available transmission resource and the network device has configured a predetermined configuration, sending the resource request to the network device;
wherein the predetermined configuration comprises that the user equipment is able to request the network device to allocate a transmission resource in a case where the user equipment adopts a network device scheduling mode.

6. The method according to claim 1, wherein the user equipment having no available transmission resource comprises at least one of:
the user equipment being not configured with a transmission resource for SL PRS transmission; or
the user equipment being configured with a transmission resource for SL PRS transmission and the transmission resource for SL PRS transmission being not able to be used to transmit the triggered SL PRS.

7. The method according to claim 6, wherein the user equipment being configured with the transmission resource for SL PRS transmission and the transmission resource for SL PRS transmission being not able to be used to transmit the triggered SL PRS comprises at least one of:
an SL PRS sequence identity specified for the transmission resource for SL PRS transmission not comprising an SL PRS sequence identity of the triggered SL PRS; or
a bandwidth specified for the transmission resource for SL PRS transmission not meeting a bandwidth requirement of the triggered SL PRS; or
a latency specified for the transmission resource for SL PRS transmission not meeting a latency requirement of the triggered SL PRS; or
a transmission period specified for the transmission resource for SL PRS transmission not meeting a transmission period requirement of the triggered SL PRS; or
the transmission resource for SL PRS transmission being a second type configured grant resource (type 2 configured grant), and the transmission resource for SL PRS transmission being in an inactive state.

8. The method according to claim 1, wherein sending the resource request to the network device in the case where the user equipment has the triggered Sidelink Positioning Reference Signal (SL PRS) and the user equipment has no available transmission resource comprises:
in a case where the user equipment has the triggered SL PRS and the user equipment has no available transmission resource, sending the resource request to the network device through a Radio sending Resource Control (RRC) message, a Medium Access Control Control Element (MAC CE) message or an uplink control channel PUCCH.

9. The method according to claim 1 or 7, wherein in a case where the user equipment needs to request the network device to activate a second type configured grant resource, the resource request comprises an index of the second type configured grant resource.

10. The method according to claim 1, further comprising:
in a case where the user equipment does not need to transmit the SL PRS again, sending indication information to the network device, wherein the indication information is used to notify the network device that the user equipment has no SL PRS that needs to be transmitted.

11. The method according to claim 10, wherein the user equipment not needing to transmit the SL PRS again comprises at least one of:
a triggered one-time transmission being canceled; or
a triggered periodic SL PRS transmission being cancelled; or
a triggered semi-persistent SL PRS transmission being cancelled.

12. The method according to claim 10, wherein the indication information is sent to the network device in a case where the user equipment does not need to transmit the SL PRS again and at least one of the following condition is met:
the user equipment having a configured grant SL PRS transmission resource which is configured by the network device; or
the user equipment having requested a transmission resource to the network device; or
the user equipment having not sent the indication information to the network device.

13. The method according to claim 10, wherein sending the indication information to the network device in the case where the user equipment does not need to transmit the SL PRS again comprises:
in the case that the user equipment does not need to transmit the SL PRS again, sending the indication information to the network device through a Radio sending Resource Control (RRC) message, a Medium Access Control Control Element (MAC CE) message or an uplink control channel PUCCH.

14. The method according to claim 1, wherein sending the resource request to the network device in the case where the user equipment has the triggered Sidelink Positioning Reference Signal (SL PRS) and the user equipment has no available transmission resource comprises:
in a case where a network configuration message sent by the network device is received and the user equipment has the triggered SL PRS and the user equipment has no available transmission resource, sending the resource request to the network device;
wherein the network configuration message carries information allowing the user equipment to request the transmission resource.

15. The method according to claim 1, further comprising:
in a case where the user equipment receives a transmission resource sent by the network device, performing resource request cancellation.

16. The method according to claim 1, further comprising:
in case where the user equipment sends the resource request to the network device, performing resource request cancellation.

17. The method according to claim 15 or 16, wherein performing resource request cancellation comprises:
cancelling all triggered resource requests; or
cancelling a resource request that is fulfilled by the transmission resource.

18. A scheduling method for a sidelink positioning reference signal, wherein the method is performed by a network device, and the method comprises:
receiving a resource request sent by user equipment; and
according to the resource request, configuring a transmission resource to the user equipment.

19. The method according to claim 18, wherein the resource request comprises at least one of a bandwidth requirement, a transmission type or a latency requirement, and the transmission type comprises at least one of one-time transmission, periodic transmission, or semi-persistent transmission.

20. The method according to claim 18, wherein receiving the resource request sent by the user equipment comprises:
in a case where the network device has configured a predetermined configuration, receiving the resource request sent by the user equipment, wherein the predetermined configuration comprises configuring the transmission resource for the user equipment in a case where the user equipment adopts a network device scheduling mode.

21. The method according to claim 18, wherein after receiving the resource request sent by the user equipment, the method further comprises:
in a case where the received resource request comprises an index of a second type configured grant resource, activating the second type configured grant resource according to the index of the second type configured grant resource.

22. The method according to claim 18, further comprising:
receiving indication information sent by the user equipment; and
according to the indication information, determining that the user equipment has no SL PRS that needs to be transmitted.

23. The method according to claim 18, further comprising:
sending a network configuration message to the user equipment, wherein the network configuration message carries information allowing the user equipment to request the transmission resource.

24. A scheduling apparatus for a sidelink positioning reference signal, comprising:
a sending module configured to, in a case where user equipment has a triggered Sidelink Positioning Reference Signal (SL PRS) and the user equipment has no available transmission resource, send a resource request to a network device.

25. A scheduling apparatus for a sidelink positioning reference signal, comprising:
a receiving module configured to receive a resource request sent by user equipment; and
a configuration module configured to configure a transmission resource to the user equipment according to the resource request.

26. User equipment, comprising:
a processor; and
a memory configured to store instructions executable by the processor;
wherein the processor is configured to, when the executable instructions are executed, implement steps of the method according to any one of claims 1 to 17.

27. A network device, comprising:
a processor; and
a memory configured to store instructions executable by the processor;
wherein the processor is configured to, when the executable instructions are executed, implement a step of the method according to any one of claims 18 to 23.

28. A computer-readable storage medium having computer program instructions stored thereon, wherein when the program instructions are executed by a processor, a step of the method according to any one of claims 1 to 17 is implemented, or a step of the method according to any one of claims 18 to 23 is implemented.
